# EUROPEAN PATENT SPECIFICATION

(11) **EP 0 741 146 B1**
(45) Date of publication and mention of the grant of the patent: **02.08.2000**
(21) Application number: 96106289.0
(22) Date of filing: 22.04.1996
(51) Int. Cl.: C08F 10/02, C08F 4/607, C08F 4/611

(54) **Catalyst with improved activity for ethylene (co)-polymerization**
Katalysator für Ethylen-(Co)-Polymerisation mit verbesserter Aktivität
Catalyseur pour la (co)-polymérisation d'éthylène ayant une activité améliorée

(30) Priority: 05.05.1995 IT MI950896
(43) Date of publication of application: 06.11.1996
(73) Proprietor: ENICHEM S.p.A., 20124 Milano (IT)
(72) Inventor: Fusco, Roberto, Novara (IT); Longo, Luca, Novara (IT); Gila, Liliana, 28063 Cameriano (NO) (IT); Cambisi, Franco, 28047 Oleggio (Novara) (IT)
(74) Representative: De Gregori, Antonella

(56) References cited:
- EP-A- 0 002 521
- EP-A- 0 575 875
- FR-A- 1 265 836
- FR-A- 1 447 837
- US-A- 4 665 047
- US-A- 5 416 179
- CHEMICAL ABSTRACTS, vol. 73, no. 16, 19 October 1970 Columbus, Ohio, US; abstract no. 77712y, MATKOVSKI: "Activation of the homogeneous catalyc system..." page 77716; column 2; XP002009664 & VYSOKOMOL SOEDIN SER A, vol. 12, no. 7, 1970,

## Description

The present invention relates to a catalyst with improved activity for ethylene (co)polymerization.

More particularly, the present invention relates to a Ziegler-Natta catalyst particularly active in processes for ethylene homopolymerization or (co)polymerization with other alpha-olefins.

In general, it is known in the art that it is possible to (co)polymerize ethylene by means of low, medium and high, pressure processes, with transition metal-based catalysts, generally known as Ziegler-Natta catalysts.

The catalysts useful for such a purpose, which may be either homogeneous or heteregenous, are generally obtained by contacting a precursor species constituted by a transition metal compound, preferably belonging to groups (IVB) e (VB) of the Periodic Table of the elements, with a co-catalyst constituted by an organometallic compound or a hydride of metals belonging to groups (IA), (IIA) or (IIIA) of said Periodic Table, by operating in suspension, in solution, or also in the absence of solvents or diluents. For such a technique reference is made to the disclosure by J. Boor in "Ziegler-Natta Catalysts and Polymerization", Academic Press, New York (1979). However, cases exist in which an organometallic compound of a transition metal proved to be active in olefins polymerization also in the absence of said co-catalyst, as disclosed, for example, in Italian Patent Applications N. 22075 A/90 and N. MI92A00415.

A particular class of said catalysts active in ethylene (co)polymerization are obtained by combining an oxygen containing organo-aluminium derivative (commonly referred to as an "aluminoxane") with an eta⁵-cyclopentadienyl derivative of a metal such as titanium, zirconium or hafnium, also commonly referred to as "metallocene", which, in its most general form, can be defined by the following formula (I): 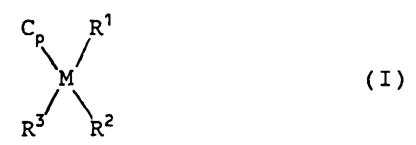 wherein
-- M represents a metal belonging to group (IVB) of the Periodic Table of the elements, formally in oxidation state +4, and preferably is titanium or zirconium;
-- R¹ and R² represent, each independently, a group of anionic character such as, for example, a hydride, a halogenide, a phosphonate or sulfonate anion, an alkyl or alkoxy group, an aryl or aryloxy group, an amide group, a silyl group, and so forth;
-- Cₚ represents, independently, an eta⁵-cyclopentadienyl ligand and is generally selected among eta⁵-cyclopentadienyl, eta⁵-indenyl, eta⁵-fluorenyl and variously substituted derivatives thereof;
-- R³ can have, independently from the nature of the other substituents, one of the meanings of the ligand Cₚ and of R¹ or R² groups. "Bridge" metallocene compounds, wherein two groups Cₚ, which may be the same or different from each other, are bonded by a covalent bridge which usually comprises also other carbon atoms or heteroatoms, also resulted to be particularly interesting in the prior art. For a known technique for the preparation of the above said compounds, reference is made , for exemplifying purposes, to H. Sinn, W. Kaminsky, in Adv. Organomet. Chem., Vol. 18 (1980), page 99 and to U.S. Patent No. 4,542,199.

Also other classes of compounds are known in the art which are suitable for preparing Ziegler-Natta catalysts, such as, for example, organometallic derivatives which can be referred to as "metallo-arenes", in which an aromatic group (arene) is "π"-bonded to a transition metal preferably selected among metals belonging to the groups from IVB to IVB of the Periodic Table. Such metallo-arenes are capable, when combined with an aluminium organometallic derivative, of polymerizing olefins.

A large number from said catalysts, both homogeneous and heterogeneous, are characterized by high polymerization activities and allow high productivity levels to be reached. However, the increased field requirements as well as the need for further decreasing the metal content in the so obtained polyethylene, involve a continuous research work for catalysts and polymerization processes characterized by still higher activity and productivity levels.

Among the various solutions proposed, from the specific literature of the technical field, several references describe, and variously interpret, the activating effect of an alpha-olefin on ethylene polymerization in the presence of the above-said, both homogeneous and heterogeneous, catalysts. It was oberseved, in fact, that ethylene polymerization takes place more rapidly in the presence of a comonomer selected among alpha-olefins. In particular, investigations can be cited which relate to the activating effect of 1-butene or 1-hexene with "classic" catalysts, obtained by starting from titanium trichloride and an electron-donor compound (Lewis base), in combination with trialkyl-aluminium compounds (V. Pasquet et al., in "Makromoleculare Chemie", Vol. 194 (1993), pages 451-461). A work relating to the activating effect of 4-methyl-1-pentene with analogous catalysts is reported by P. J. T. Tait et al. in "Proceedings of the International Symposium on Catalyst Design for Tailor-Made Polyolefins", Kanezawa, March 10-12, 1994, K. Soga and M. Terano editors, Elsevier Publisher, (1994), pages 55-72.

The activating effect was also described of alpha-olefins in ethylene polymerization by means of catalysts belonging to the most recent "generation", based on metallocenes, such as, for example, in the paper by J. Koivumaki et al., in "Macromolecules", Vol. 27 (1994), pages 6254-6258, relating to 1-dodecene and 1-octadecene comonomers. However, the alpha-olefins effect on the latter catalyst type, is under discussion, and is generally low. In some cases even deactivating effects have been observed, as reported, for example, in the paper by J. C. W. Chien et al., in "J. of Polymer Science, Part A, Polymer Chemistry", Vol. 31, (1993), pages 227-237, with regard to 1-hexene.

In U.K. Patent N. 1,281,932, a considerable activating effect is reported of propylene in the presence of a catalyst based on TiCl₃ and trialkyl-aluminium compounds, whilst comparison tests carried out with internal olefins, or with 2-alkyl-substituted alpha-olefins (isobutene) did not show any meaningful improvements as compared to ethylene homopolymerization reaction carried out under the same operating conditions. Substantially analogous results, for "internal" olefins used in combination with a heterogenous catalyst, are reported by J. C. W. Chien et al., in the above cited paper.

P.E. Matkovskii et al., in the Russian publication "Vysocomol. Soedin., Series A, Vol. 12(7) (1970), pages 1662-8," disclose a catalyst which is the combination of bis(cyclopentadienyl)-titanium dichloride, an activator which may be isobutene and diethylaluminum chloride. Such a catalyst is moderately active in unusual solvent ethylchloride, whilst no activating effect from isobutene is observed when toluene is used as a solvent. No catalyst based on the combination of a metallocene and any oganooxigenated metallorganic compound like aluminoxane is mentioned in this paper.

The improvement in ethylene polymerization rate, which can be obtained in the presence of alpha-olefins results to be also affected by at least a further considerable drawback, consisting in the fact that in such processes it is not possible to prevent alpha-olefin from not being copolymerized with ethylene. Therefore, polyethylene homopolymeric cannot be obtained by means of said processes, nor is it possible to control the amount of copolymerized alpha-olefin independently from the overall process productivity. Furthermore, the activating effect of alpha-olefins on metallocene-based catalysts appears to be poorly meaningful and is at issue.

Therefore, the need persists still of having available Ziegler-Natta catalysts (or, more generally, coordination catalysts) characterized by very high activity in ethylene (co)polymerization, without incurring additional drawbacks and with the capability of obtaining polymers having the desired monomer composition being kept unchanged.

The Applicant has surprisingly found now that the activity of particular Ziegler-Natta catalysts can be considerably improved by modifying them with particular vinyl compounds.

A first object of the present invention is therefore an improved catalyst active in ethylene polymerization or in ethylene (co)-polymerization with an alpha-olefin, characterized in that it consists of the following components, into contact with each other:
(A) an alpha-olefin having the following general formula (II): 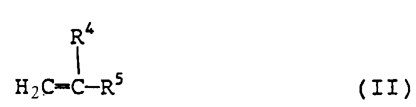 wherein R⁴ and R⁵ are two substituents selected, independently, from linear, cyclic or branched aliphatic or aromatic hydrocarbon groups having from 1 to 12 carbon atoms, or they are bonded to each other to form a cyclic, substituted or non-substituted, compound comprising the vinyl carbon atom in a ring containing from 3 to 8 carbon atoms with the proviso that said alpha-olefin is not isoprene, and
(B) a compound of the metallocene type having following general formula (III): 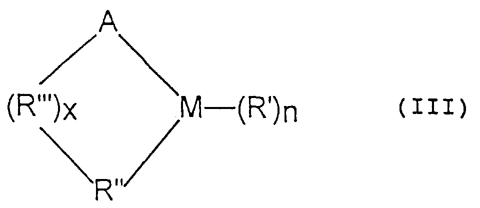 wherein:
   -- M represents a metal selected from titanium, zirconium or hafnium,
   -- A is an anion containing an eta⁵-cyclopentadienyl ring coordinated to metal M;
   -- each of n R¹'s represents, independently, a substituent group selected among hydride, halide, a C₁-C₈-alkyl group, a C₃-C₁₂-alkylsilyl group, a C₅-C₈-cycloalkyl, a C₆-C₁₀-aryl group, a C₁-C₈-alkoxy group, a C₁-C₈-carboxy group, a C₂-C₁₀-dialkylamide group and a C₄-C₂₀-alkylsilylamide group-;
   -- R" represents a substituent group of the same type as the preceding R' groups, selected independently from them, or a second anion containing an eta⁵-cyclopentadienyl ring coordinated to metal M;
   -- R‴ represents a bivalent group having from 1 to 10 carbon atoms, possibly containing one or more heteroatoms, preferably, O, N, P, or Si, which is bridge-bonded between A and R" by means of a covalent bond. R‴ is preferably selected from alkylene, dialkylsilylene, diarylsilylene, alkyl- or arylamino or phosphino radicals, arylene, and the like.
   -- "n" is an integer number and is equal to the valency of M minus 2;
   -- "x" can be either 0 or 1.
(c) an organo oxigenated derivative or aluminum, gallium or tin.

A second object of the present invention is a process for improving the activity of a Ziegler-Natta catalyst for ethylene (co)polymerization which consists of, or is derived from, an organometallic derivative of a metal M as defined above, characterized in that said catalyst is brought into contact with an alpha-olefin having the above formula (II), in such amounts that the alpha-olefin moles/M gram-atoms ratio is not lower than 2, and preferably is comprised within the range of from 50 to 500.

A further object of the present invention is an improved process for ethylene (co)polymerization, characterized in that it is carried out in the presence of the above said improved Ziegler-Natta catalyst.

By the term "ethylene (co)polymerization", as used in the following disclosure of the present invention and in the appended claims, reference is made to ethylene homopolymerization as well as to ethylene (co)polymerization with alpha-olefins such as, for example, propylene, 1-butene, styrene, 1-octene, and so forth.

In the widest meaning of the present invention, the alpha-olefin of formula (II), previously defined as the (A) component, can be any primary olefin having two hydrocarbon groups bonded to the same vinyl carbon atom with the exclusion of isoprene. The R⁴ and/or R⁵ groups can be constituted by a linear or branched aliphatic alkyl group having from 1 to 12 carbon atoms, or by cycloalkyl o polycycloalkyl group, saturated or unsaturated, having from 4 to 12 carbon atoms, or by an aryl or arylalkyl group having from 6 to 12 carbon atoms, or, still, by a heterocyclic group having from 4 to 12 carbon atoms.

Exemples of R⁴ and R⁵ aliphatic groups are methyl, ethyl, butyl, octyl, 4-methylpentyl, cyclopentyl, cyclohexyl groups, and the like. Exemples of R⁴ and R⁵ aryl o arylalkyl groups are phenyl, dimethylphenyl, chlorophenyl, methoxyphenyl, benzyl, methylbenzyl groups, and the like.

Examples of heterocyclic R⁴ and R⁵ groups are furyl, pyridyl, pyrrolidino, and the like.

Olefins of formula (II) in which R⁴ is methyl or ethyl and R⁵ is selected from the group consisting of methyl, ethyl, n-propyl, n-cyclobutyl, cyclopentyl or phenyl, are preferred. Other preferred olefins according to the present invention are those in which R⁴ and R⁵ are bonded to each other to form a ring comprising the vinyl carbon atom. Examples of such olefins are: methylidenecyclopentane, methylidenecyclohexane, 1-methylidene-4-methylcyclohexane, 4-methylidene-norborn-1-ene.

Olefins of formula (II) particularly preferred for the purposes of the present invention are: isobutene, 2-methylpent-1-ene, 2,4-dimethylpent-1-ene, alpha-methylstyrene, methylidenecyclopentane and 2-ethyloct-1-ene.

The catalyst for ethylene (co)polymerization according to the present invention consists of the (A) alpha-olefin previously defined, kept into contact with a (B) and (C) components as defined above. The contact between the (A), and (B) and (C) components, and possibly other components which will be defined in the following, can cause a chemical reaction to take place involving the formation, at least partially, of different compounds than those initially put into contact and previously mentioned, which, however, have to be considered fully included within the scope and the meaning of the present invention.

The metal M is selected from titanium, zirconium and hafnium.

Metallocene derivatives constituting component B according to present invention and methods for preparing them are widely reported in specific literature references. For merely exemplifying and non-limitative purposes, we mention here the paper edited by V. Gupta in "Journal of Macromolecular Science, Rev. Macromolecular Physics, Vol. C34(3) (1994), pages 439-514.

In the compounds having the above formula (III), when "x" is 0 both groups R" and A are not bridge-bonded to each other. Typical non-limitative examples of R‴ are methylene, 1,2-ethylene, dimethylsilylene groups.

According to the present invention, the groups R of formula (III) can represent, each independently, a hydride or halide, such as chloride or bromide, a C₁-C₈-alkyl group such as, for example, methyl, ethyl, butyl, isopropyl, isoamyl, octyl, benzyl, a C₃-C₁₂-alkylsilyl group such as, for example, trimethylsilyl, triethylsilyl or tributylsilyl, a cycloalkyl group, such as cyclopentyl or cyclohexyl, a C₆-C₁₀-aryl group such as phenyl or tolyl, a C₁-C₈-alcoxy group such as, for example, methoxy, ethoxy iso- or sec.-butoxy, or, furthermore, a C₂-C₁₀-dialkylamide or C₄-C₂₀-alkylsilylamide group, preferably of the type which can be represented by the general formula -NR⁴R⁵, wherein R⁴ and R⁵ are alkyl groups having from 1 to 4 carbon atoms, such as, for example, methyl, ethyl or butyl groups, or, in the case of alkylsilylamides, alkylsilyl groups having from 3 to 6 carbon atoms, such as, for example, trimethylsilyl or triethylsilyl.

Preferably, R' groups of formula (III), represent a radical selected among chloride, methyl, benzyl and diethylamino.

In a particularly preferred embodiment, the R' groups are all equal to one another.

According to the present invention, the A group in formula (III) is an anion containing an eta⁵-cyclopentadienyl ring which is preferably derived (formally by extraction of an H⁺ ion) from a cyclopentadiene, indene or fluorene molecule, or from a derivative of the above said compounds, wherein one or more carbon atoms of the molecular backbone (comprised or not comprised within the cyclopentadienyl ring), are substituted by C₁-C₈-alkyl or silylalkyl groups, or C₆-C₁₀-aryl or aryloxy, or C₁-C₈-alkoxy. Said A group can also be condensed with one or more other aromatic rings such as in the case of, for example, 4,5-benzoindenyl. Particularly preferred A groups are indenyl groups, 4,5,6,7-tetrahydroindenyl and the corresponding methyl-substituted groups.

As defined above, R" in formula (III) can represent both a group falling within the above meaning of the R' group, as well as a group falling within the above meaning of A group. When "x" = 1, the R" group is bonded to the A group by means of the R bridge; in such case it will clearly represent a group falling within the meaning of R or, respectively, A, but having a position substituted by the bond with the R‴ bridge.

Metallocenes having the above formula (III) are generally known in the art and can be prepared by means of one of the usual suitable methods, described in manuals relating to organometallic compounds synthesis, or in the wide field of patent literature relating to the use of metallocenes in olefins polymerization. For exemplifying purposes, reference is made again to the paper by V. K. Gupta, previously cited, as well as to patent publications N. EP-A-416 815, N. EP-A-528 287, N. EP-A-574 794, N. EP-A-576 970, N. EP-A-577 581, WO Patent N. 86/05788, U.S. Patent N. 5 264 405 and U.S. Patent N. 5 304 523.

Non-limitative examples of compounds of formula (III) are reported in the following:
(eta⁵-C₅H₅)₂TiCl₂
[1,2-ene(eta⁵-Ind)₂]ZrCl₂
(eta⁵-Ind)Zr(NMe₂)₃
[Ph₂Si(eta⁵-Ind)₂]ZrCl₂
[Me₂Si(eta⁵-Ind)₂]HfCl₂
[1,2-ene(eta⁵-THInd)₂]ZrMe₂
[1,2-ene(eta⁵-Ind)₂]TiMe₂
[Me₂Si(eta⁵-C₅Me₄)(NBu^{t})]TiCl₂
(eta⁵-C₅H₅)₂ZrCl₂
(eta⁵-C₅Me₅)TiCl₃
(eta⁵-C₅Me₅)₂ZrMe₂
(eta⁵-C₅H₅)₂TiClMe
[Prⁱ(eta⁵-C₅H₅)(eta⁵-Flu)]ZrCl₂
(eta⁵-C₅H₅)₂ZrCl(NMe₂)
(eta⁵-THInd)₂ZrCl₂

In the preceding formulae the following abbreviations were used: Me = methyl, Et = ethyl, Bu^{t} = tert.-butyl, Bz = benzyl, Prⁱ = 2,2-isopropylidene, Ind = indenyl, THInd = 4,5,6,7-tetrahydro-indenyl, Flu = fluorenyl, 1,2-ene = 1,2-ethylidene, Ph₂Si = diphenylsilylene, Me₂Si = dimethylsilylene.

Those (B) components fall furthermore within the scope of the present invention, which are constituted by, or are obtained by starting from, a metallocene or a metalloarene belonging to any of the preceding classes previously described, which is supported on a solid inert carrier, preferably selected from the inert inorganic oxides, more preferably selected from alumina, silica, and aluminosilicates. Such supported complexes can be obtained by impregnating the carrier by means of a solution of the metal complex in an inert solvent, or they can be prepared by means of methods comprising the formation of relatively stable chemical bonds between complex and carrier. Supported metallocene complexes or metalloarenes, active in olefins polymerization, and methods for the preparation thereof, are described in un a number of papers generally known to those skilled in the art, such as, for example, Italian Patent Application N. 95/A 000167, European Patent Application publication Nos. EP-A-442 725 and EP-A-516 458, and U.S. Patent N. 5 057 475.

Besides (A) and (B) components, the catalyst according to the present invention includes a third (C) component constituted by an organo oxigenated derivative of aluminum, gallium or tin.

More particularly, said (C) component is preferably constituted by an aluminoxane in the case where the (B) component comprises a metallocene derivative. It is well known that aluminoxanes are compounds containing Al-O-Al bonds, with variable O/Al ratios, which can be obtained in the art by reacting, under controlled conditions, an alkylaluminium compound, or alkylaluminium halogenide, with water or other compounds contained controlled amounts of available water, such as, for example, in the case of trimethylaluminium, with a hydrous salt, such as aluminium sulfate hexahydrate, copper sulfate pentahydrate and iron sulfate pentahydrate. Aluminoxanes preferably useable for the formation of the polymerization catalyst of the present invention are cyclic or linear, oligomeric or polymeric compounds, characterized by the presence of repetitive units of formula: 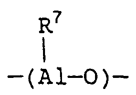 wherein R⁷ is a C₁-C₄-alkyl group, preferably methyl.

Each aluminoxane molecule preferably contains from 4 to 70 repetitive units which can also be not the same, but can contain different R⁷ groups.

In particular, in ethylene polymerization catalysts of the present invention, the aluminoxane and the (B) component comprising a metallocene are used in such amounts that the atomic ratio between aluminium in aluminoxane and metal M is comprised within the range of from 10 to 10000 and preferably of from 100 to 5000.

Besides the above said aluminoxanes, within the definition of (C) component of the present invention also galloxanes (wherein, in the preceding formulae, gallium is present in place of aluminium) and stannoxanes fall. The use of stannoxanes, as cocatalysts for olefins polymerization in the presence of metallocene complexes is reported, for example, in U.S. Patent Nos. 5,128,295 and 5,258,475.

According to the present invention, the sequence according to which the (A), (B) and (C), components are mixed with one another, is not critical. In particular, the (A) component can be combined with (B) component, and subsequently with (C) component, or (B) and (C) components can be pre-mixed and reacted with each other, with the (A) component being subsequently added to the resulting mixture.

According to the process of the present invention for the preparation of the improved ethylene polymerization catalyst, the (A) and (B) components can be mixed with each other in each of the characteristic steps of the preparation of a Ziegler-Natta catalyst. In fact, on the base of Applicant's experience, the choice of the mixing step is not critical. It is however preferable that such a mixing is carried out before that the contact between the catalytic system (i.e., the catalyst, or catalyst plus activating agent, according to the traditional terminology) and ethylene takes place, in order to obtain the maximum catalyst activation. However, those catalysts formed by introducing the olefin of formula (II) after ethylene polymerization starting in the presence of the only catalyst based on the previously defined (B) component, are not excluded from the scope of the present invention.

The mixing and contacting steps of the different components of the catalyst according to the present invention, in particular the (A) (B) and (C) component, can be carried out within wide time and temperature ranges. (B) and (C) components are preferably mixed and kept into contact at temperatures, under conditions and during time periods which are the same as those used in the art in order to obtain the traditional desired catalyst in the absence of the (A) component. The (A) component is preferably brought into contact with the (B) component or with the resulting product from (B) and (C) for the time periods which are necessary in order to obtain the desired activation, which are normally comprised within the range of from 2 seconds to 5 minutes, at temperatures comprised within the range of from -50°C to +150°C. Longer contact times do not produce further activity increases, but, however, it is preferable that such a contact is kept between the catalyst components at least until the polymerization step, and, possibly, also during such a step.

According to the present process for preparing the improved catalyst of the present invention, one or more components can be mixed, and possibly, reacted with the (B) component before or after the contact of the latter with the (A) alpha-olefin.

Additives or components which can be comprised within the preparation and/or formulation of the catalyst of the present invention, are inert solvents, such as, for example, aliphatic and/or aromatic hydrocarbons, aliphatic and aromatic ethers, coordinating additives (Lewis' Bases) such as, for example, ethers, tertiary amines, alcohols, phosphines, halogenating agents such as silicon halides, halogenated, preferably chlorinated, hydrocarbons, hydrochloric acid and the like, and furthermore, all such other components as normally used in the preparation of homogeneous or heterogeneous traditional Ziegler-Natta catalysts for ethylene (co)polymerization.

The catalysts according to the present invention are useful in ethylene polymerization, to yield linear polyethylene, and in ethylene (co)polymerization with propylene or higher alpha-olefins, to yield copolymers having different structures as a function of the specific polymerization conditions and of the alpha-olefin itself. The catalyst of the present invention can also be advantageously used for ethylene, propylene and a diene terpolymerization, in order to obtain vulcanizable rubbers of EPDM type. Particularly preferred is ethylene homopolymerization in the presence of said catalysts.

The catalysts according to the present invention can be used with very good results being obtained substantially in all of known polymerization processes, such as, for example, processes operating in suspension, under low, medium or high pressure and at temperatures comprised within the range of from 50 to 240°C; processes operating in solution in an inert diluent under pressures comprised within the range of from 10 to 150 bar and temperatures comprised within the range of from 120 to 230°C; or in gas phase, with temperatures generally comprised within the range of from 60 to 160°C, under pressures comprised within the range of from 5 to 50 bar. As the molecular weight regulant, hydrogen is usually used. In all cases, the catalysts according to the present invention are characterized by an evident increase in activity as compared to the activity which can be obtained without addition of (A) alpha-olefin of formula (I). Productivity increases higher than 10 %, preferably higher than 20 %, more preferably higher than 50 %, can be surprisingly obtained with the improved catalysts of the present invention. Furthermore, a considerable decrease is observed in the initial induction time period which characterizes many of the usual polymerization processes using traditional catalysts.

According to a particular aspect of the present invention, the improved catalyst for ethylene (co)polymerization is separately prepared in accordance with one of the previously mentioned methods, and is subsequently introduced in the polymerization ambient. To the polymerization reactor the catalyst can be first introduced, followed by the reacting mixture containing ethylene and eventual comonomers; or, the catalyst can be added to the reactor already containing the reacting mixture; or, finally, the reacting mixture and the catalyst can be simultaneously fed to the reactor.

According to a further aspect of the present invention, the improved catalyst is formed in situ in the polymerization reactor, for example, by introducing the (A) and (B) components, in which (B) is not capable, as such, of polymerizing ethylene, subsequently feeding the ethylene containing mixture and finally adding the (C) component. According to a further embodiment, the (C) component is charged to the reactor, followed by the (A) and (B) components mixture and by ethylene feed. According to a still further embodiment, the (C) component, the (A) and (B) mixture and ethylene are separately fed to the reactor and mixed therein.

According to the present invention, the (A) component can also be fed to the reactor mixed with ethylene and optional comonomers, the (B) and (C) mixture, being separately fed.

The present invention is further described by the following examples, which however are reported for merely illustrative purposes, and are non-limitative of the scope of the present invention.

### EXAMPLE 1

A solution consisting of a precursor of a catalyst according to the present invention is prepared by adding 1.45 ml of anhydrous 2-methyl-1-butene (distilled on calcium hydride) to a solution obtained by dissolving 21.2 mg of bis(eta⁵-cyclopentadienyl)zirconium dichloride (available from the Company FLUKA, 72.6 micromoles) in 100 ml of anhydrous toluene.

A BUCHI autoclave with one litre glass reactor, equipped with a propeller stirrer, heating resistor and temperature control jacket, was preliminarly kept under vacuum for two hours and it was then filled with nitrogen. The same cycle of vacuum/nitrogen application was repeated twice more. 500 ml of anhydrous toluene (distilled on sodium metal) and 0.54 ml of a solution consisting of 10 % by weight of methyl aluminoxane in toluene (from the Company WITCO, containing 42.4 g/litre of aluminium) were then added. The temperature was raised up to 70°C and 0.47 ml, of the previously prepared precursor solution were added. After about 5 minutes, with stirring, ethylene was charged until a pressure of 202 kPa was obtained. The polymerization started immediately and was carried out for 30 minutes by keeping the autoclave at 70°C with stirring, and continuously feeding ethylene to maintain a constant pressure value equal to the initial value. After 30 minutes, the polymerization was stopped, and the polymer was collected by precipitation with acidified methanol and subsequent washings with acetone. After drying, 26 g of polyethylene were obtained in a yield of 8.27 Kg_{PE}/g_{Zr}·kPa_{(ethylene)}·h. The so obtained polymer was characterized by gel-permeation chromatography according to the usual procedure used for polyethylene, using trichlorobenzene at 130°C as the solvent. The result of such measurement was:
-- Mₙ = 116,000 and
-- M_{w} = 254,000.

### EXAMPLE 2 (Comparative example)

A solution of a traditional catalyst precursor is prepared by dissolving 24.0 mg of the above bis(eta⁵-cyclopentadienyl)zirconium dichloride (82.2 micromoles) in 100 ml of anhydrous toluene. An ethylene polymerization was then carried out under the same conditions as in the preceding Example 1, with the exception that 0.41 ml of the latter solution was used in place of the 2-methyl-1-butene containing solution. After drying, 19 g of polyethylene having average molecular weights Mₙ = 134,000 and M_{w} = 270,000, as determined as described above, in a yield of 6.37 Kg_{PE}/g_{Zr}·kPa_{(ethylene)}·h, were obtained.

## Claims

1. Improved catalyst for ethylene (co)polymerization, characterized in that it consists of the following components, into contact with each other:
(A) an alpha-olefin having the following general formula (II): 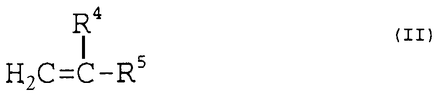 wherein R⁴ and R⁵ are two substituents independently selected from linear, cyclic or branched, aliphatic or aromatic hydrocarbon groups having from 1 to 12 carbon atoms, or they are bonded to each other to form an either substituted or non-substituted cyclic compound comprising the vinyl carbon atom in a ring containing from 3 to 8 carbon atoms, with the proviso that said alpha-olefin is not isoprene, and
(B) a compound of a metal M selected from the group consisting of the metallocene type having the following general formula (III): 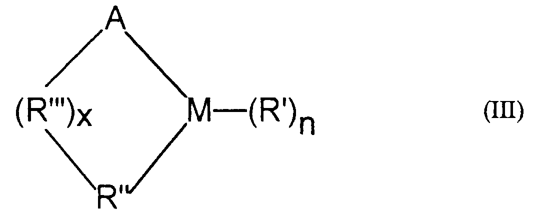 wherein:
-- M represents a metal selected from titanium, zirconium or hafnium;
-- A is an anion containing at least one η⁵-cyclopentadienyl ring coordinated to the metal M;
-- each of R' radicals independently represents a substituent group selected from hydride, halide, a C₁-C₈-alkyl group, a C₂-C₁₂-alkylsilyl group, a C₅-C₈-cycloalkyl group, a C₆-C₁₀-aryl group, a C₁-C₈-alkoxy group, a C₁-C₈-carboxy group, a C₂-C₁₀-dialkylamide group and a C₄-C₂₀-alkylsilylamide group;
-- R" represents a substituent group of the same nature as of the preceding R' groups, selected independently from them, or a second anion containing an η⁵-cyclopentadienyl ring coordinated to the metal M;
-- R"' represents a divalent group having from 1 to 10 carbon atoms, possibly containing one or more heteroatoms, preferably, 0, N, P, or Si, which is bridge-bonded between A and R" by means of a covalent bond;
-- "n" is an integer number and is equal to the valency of M minus 2;
-- "x" can be 0 or 1.
(C) an organooxigenated derivative of aluminum, gallium or tin.

2. Catalyst according to claim 1, wherein, in said alpha-olefin of formula (II), R⁴ is methyl or ethyl, and R⁵ is selected from the group consisting of methyl, ethyl, n-propyl, n-butyl, cyclopentyl or phenyl.

3. Catalyst according to claim 1, wherein said alpha-olefin of formula (II) is selected from isobutene, 2-methylpent-1-ene, 2-ethylbut-1-ene, 2,4-dimethylpent-1-ene, alpha-methylstyrene, methylidenecyclopentane, methylidenecyclohexane, 2-ethyloct-1-ene, methylidenecyclohexane, and 4-methylidenenorborn-1-ene.

4. Catalyst according to anyone of the preceding claims, in which the ratio between the moles of said alpha-olefin of formula (II) and the gram-atoms of said metal M is equal to, or higher than, 2, and preferably is comprised within the range of from 50 to 500.

5. Catalyst according to claim 1, wherein, in formula (III), "x" is 1, R"' is selected from alkylene, dialkylsilylene, diarylsilylene and arylene and R" is a second anion containing an η⁵-cyclopentadienyl ring coordinated to metal M.

6. Catalyst according to claim 1, wherein, in formula (III), "x" is 0, and R" is a second anion containing an η⁵-cyclopentadienyl ring coordinated to metal M.

7. Catalyst according to anyone of the preceding claims from 1 to 6, in which said organo-oxigenated derivative is an oligomeric or polymeric methylaluminoxane containing from 4 to 70 repetitive units.

8. Catalyst according to anyone of the preceding claims from 1 to 7, in which the atomic ratio between the metal in the organo-oxigenated derivative (C) and metal M in (B) component is comprised within the range of from 10 to 10,000 and preferably of from 100 to 5,000.

9. Process for improving the activity of a catalyst for ethylene (co)polymerization, constituted by, or derived from, an organometallic compound of the metallocene type having the following general formula (III): 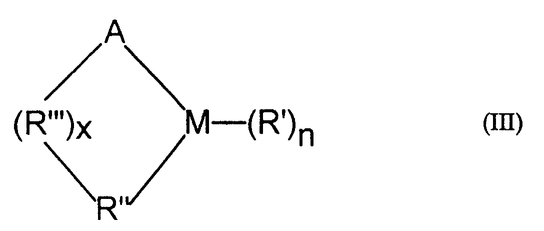 wherein:
-- M represents a metal selected from titanium, zirconium or hafnium;
-- A is an anion containing at least one η⁵-cyclopentadienyl ring coordinated to the metal M;
-- each of R' radicals independently represents a substituent group selected from hydride, halide, a C₁-C₈-alkyl group, a C₃-C₁₂-alkylsilyl group, a C₅-C₈-cycloalkyl group, a C₅-C₁₀-aryl group, a C₁-C₈-alkoxy group, a C₁-C₈-carboxy group, a C₂-C₁₀-dialkylamide group and a C₄-C₂₀-alkylsilylamide group;
-- R" represents a substituent group of the same nature as of the preceding R' groups, selected independently from them, or a second anion containing an η⁵-cyclopentadienyl ring coordinated to the metal M;
-- R"' represents a divalent group having from 1 to 10 carbon atoms, possibly containing one or more heteroatoms, preferably, 0, N, P, or Si, which is bridge-bonded between A and R" by means of a covalent bond;
-- "n" is an integer number and is equal to the valency of M minus 2;
-- "x" can be 0 or 1;
and an organo-oxigenated derivative of aluminum, gallium or tin, in contact with each other,
characterized in that said catalyst is placed into contact with an alpha-olefin having the above formula (II) of claim 1, in such amounts that the ratio between the moles of alpha-olefin and the gram-atoms of metal M is not lower than 2, and preferably is comprised within the range of from 50 to 500, with the proviso that said alpha-olefin is not isoprene.

10. Process for ethylene (co)polymerization, comprising feeding and cause ethylene to (co)polymerize in suspension, in solution or in gas phase, in a continuos or batchwise reactor, in the presence of a suitable catalyst, characterized in that said catalyst is the catalyst according to anyone of the preceding claims from 1 to 8.

11. Process according to claim 10, for ethylene homopolymerization.

12. Process according to one of the preceding claims from 10 to 11, in which said catalyst is formed in situ in said polymerization reactor.

13. Process according to claim 12, wherein ethylene is fed to the reactor mixed with an alpha-olefin having the above formula (II) of claim 1.

## Patentansprüche

1. Verbesserter Katalysator für dieEthylen-(Co)polymerisation, dadurch gekennzeichnet, daß er aus den folgenden Komponenten im Kontakt miteinander besteht:
(A) einem α-Olefin der folgenden allgemeinen Formel (II) 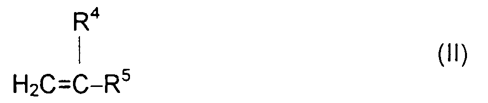 wobei R⁴ und R⁵ zwei Substituenten sind, die unabhängig ausgewählt sind aus linearen, cyclischen oder verzweigten, aliphatischen oder aromatischen Kohlenwasserstoff-Gruppen mit 1 bis 12 Kohlenstoffatomen, oder aneinander gebunden sind unter Bildung einer substituierten oder nicht-substituierten cyclischen Verbindung, umfassend das Viny-Kohlenstoffatom in einem Ring, enthaltend 3 bis 8 Kohlenstoffatome, mit der Maßgabe, daß das α-Olefin nicht Isopren ist, und
(B) einer Verbindung eines Metalls M, ausgewählt aus der Gruppe, bestehend aus Metallocen-Verbindungen der folgenden allgemeinen Formel (III): 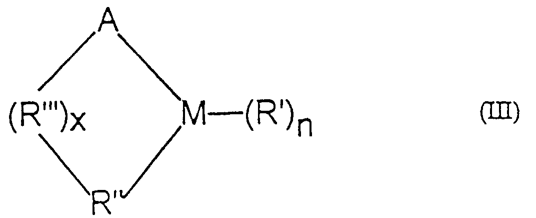 wobei
-- M ein Metall bedeutet, ausgewählt aus Titan, Zirkonium oder Hafnium;
-- A ein Anion ist, das zumindest einen η⁵-Cyclopentadienylring enthält, der mit dem Metall M koordiniert ist;
-- jeder R'-Rest unabhängig ein Substituentengruppe bedeutet, ausgewählt aus Hydrid, Halogenid, einer C₁-C₈-Alkylgruppe, einer C₃-C₁₂-Alkylsilylgruppe, einer C₅-C₈-Cycloalkylgruppe, einer C₆-C₁₀-Arylgruppe, einer C₁-C₈-Alkoxygruppe, einer C₁-C₈-Carboxylgruppe, einer C₂-C₁₀-Dialkylamidgruppe und einer C₄-C₂₀-Alkylsilyamidgruppe;
-- R" eine Substituentengruppe der gleichen Art wie die obigen R'-Gruppen, unabhängig aus ihnen ausgewählt, oder ein zweites Anion bedeutet, das einen η⁵-Cyclopentadienylring enthält, der mit dem Metall M koordiniert ist;
-- R‴ eine zweiwertige Gruppe mit 1 bis 10 Kohlenstoffatomen bedeutet, die gegebenenfalls ein oder mehrere Heteroatome, vorzugsweise O, N, P oder Si, enthält,die durch eine kovalente Bindung als Brücke zwischen A und R" gebunden ist;
"n" eine ganze Zahl ist und gleich der Wertigkeit von M minus 2 ist;
"x" 0 oder 1 sein kann
(C) einem organooxidierten Derivat von Aluminium, Gallium oder Zinn.

2. Katalysator nach Anspruch 1, wobei bei dem α-Olefin der Formel (II) R⁴ Methyl oder Ethyl ist und R⁵ ausgewählt ist aus der Gruppe, bestehend aus Methyl, Ethyl, n-Propyl, n-Butyl, Cyclopentyl oder Phenyl.

3. Katalysator nach Anspruch 1, wobei das α-Olefin der Formel (II) ausgewählt ist aus Isobuten, 2-Methylpent-1-en, 2-Ethylbut-1-en, 2,4-Dimethylpent-1-en, α-Methylstyrol, Methylidencyclopentan, Methylidencyclohexan, 2-Ethyloct-1-en, Methylidencyclohexan und 4-Methylidennorbom-1-en.

4. Katalysator nach einem der vorangehenden Ansprüche, wobei das Verhältnis von Mol des α-Olefins der Formel (II) zu g-Atom des Metalls M gleich oder größer als 2 ist und vorzugsweise im Bereich von 50 bis 500 liegt.

5. Katalysator nach Anspruch 1, wobei in Formel (III)"x" 1 ist, R"' ausgewählt ist aus Alkylen, Dialkylsilylen, Diarylsilylen und Arylen und R" ein zweites Anion ist, das einen η⁵-Cyclopentadienylring enthält, der mit dem Metall M koordiniert ist;

6. Katalysator nach Anspruch 1, wobei in Formel (III)"x" 0 ist und R" ein zweites Anion ist, das einen η⁵-Cyclopentadienylring enthält, der mit dem Metall M koordiniert ist.

7. Katalysator nach einem der vorangehenden Ansprüche 1 bis 6, wobei das organooxidierte Derivat ein oligomeres oder polymeres Methylaluminoxan ist, das 4 bis 70 wiederkehrende Einheiten enthält.

8. Katalysator nach einem der vorangehenden Ansprüche 1 bis 7, wobei das Atomverhältnis zwischen dem Metall in dem organooxidierten Derivat (C) und dem Metall M in der Komponente (B) im Bereich von 10 bis 10 000 und vorzugsweise von 100 bis 5 000 liegt.

9. Verfahren zur Verbesserung der Aktivität eines Katalysators für die Ehtylen-(Co)polymerisation, bestehend aus oder abgeleitet von einer metallorganischen Verbindung vom Metallocen-Typ der folgenden allgemeinen Formel (III): 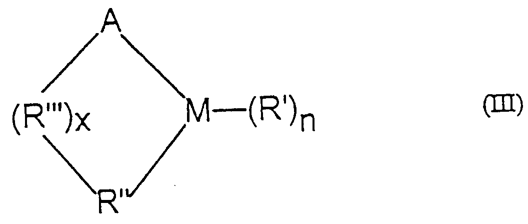 wobei
-- M ein Metall bedeutet, ausgewählt aus Titan, Zirkonium oder Hafnium;
-- A ein Anion ist, das zumindest einen η⁵-Cyclopentadienylring enthält, der mit dem Metall M koordiniert ist;
-- jeder R'-Rest unabhängig eine Substituentengruppe bedeutet, ausgewählt aus Hydrid, Halogenid, einer C₁-C₈-Alkylgruppe, einer C₃-C₁₂-Alkylsilylgruppe, einer C₅-C₈-Cycloalkylgruppe, einer C₆-C₁₀-Arylgruppe, einer C₁-C₈-Alkoxygruppe, einer C₁-C₈-Carboxylgruppe, einer C₂-C₁₀-Dialkylamidgruppe und einer C₄-C₂₀-Alkylsilyamidgruppe;
-- R" eine Substituentengruppe der gleichen Art wie die obigen R'-Gruppen, unabhängig aus ihnen ausgewählt, oder ein zweites Anion bedeutet, das einen η⁵-Cyclopentadienylring enthält, der mit dem Metall M koordiniert ist;
-- R‴ eine zweiwertige Gruppe mit 1 bis 10 Kohlenstoffatomen bedeutet, die gegebenenfalls ein oder mehrere Heteroatome, vorzugsweise O, N, P oder Si, enthält, die durch eine kovalente Bindung als rücke zwischen A und R" gebunden ist;
"n" eine ganze Zahl ist und gleich der Wertigkeit von M minus 2 ist;
"x" 0 oder 1 sein kann,
und einem organooxidierten Derivat von Aluminium, Gallium oder Zinn in Kontakt miteinander, dadurch gekennzeichnet, daß der Katalysator mit einem α-Olefin der obigen Formel (II) nach Anspruch 1 in solchen Mengen in Kontakt gebracht wird, daß das Verhältnis von Mol α-Olefin zu g-Atom Metall M nicht kleiner ist als 2, und vorzugsweise im Bereich von 50 bis 500 liegt, mit der Maßgabe, daß das α-Olefin nicht Isopren ist

10. Verfahren zur (Co)polymerisation von Ethylen, umfassend das Einspeisen und (Co)polymerisieren von Ethylen in Suspension, in Lösung oder in der Gasphase, in einem kontinuierlich oder ansatzweise arbeitenden Reaktor, in Gegenwart eines geeigneten Katalysators, dadurch gekennzeichnet, daß der Katalysator der Katalysator nach einem der vorangehenden Ansprüche 1 bis 8 ist.

11. Verfahren nach Anspruch 10 zur Ethylen-Homopolymerisation.

12. Verfahren nach einem der vorangehenden Ansprüche 10 bis 11, wobei der Katalysator in situ in dem Polymerisationsreaktor gebildet wird.

13. Verfahren nach Anspruch 12, wobei Ethylen im Gemisch mit einem α-Olefin der obigen Formel (II) nach Anspruch 1 in den Reaktor eingespeist wird.

## Revendications

1. Catalyseur amélioré pour la polymérisation ou la copolymérisation de l'éthylène, **caractérisé** en ce qu'il est constitué des constituants suivants, en contact les uns avec les autres :
(A) une alpha-oléfine ayant la formule générale (II) suivante : 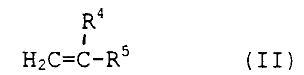 dans laquelle R⁴ et R⁵ représentent deux substituants choisis indépendamment parmi les groupes hydrocarbonés aliphatiques ou aromatiques, linéaires, cycliques ou ramifiés, ayant 1 à 12 atomes de carbone, ou bien R⁴ et R⁵ sont liés l'un à l'autre pour former un composé cyclique substitué ou non substitué, comprenant l'atome de carbone vinylique dans un cycle contenant 3 à 8 atomes de carbone, étant entendu que ladite alpha-oléfine n'est pas l'isoprène,
(B) un dérivé d'un métal M, choisi parmi les dérivés du type métallocène répondant à la formule générale (III) suivante : 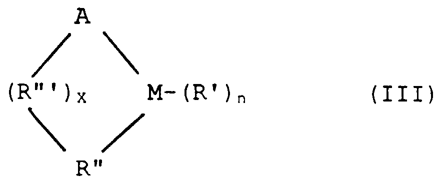 dans laquelle
M représente un métal choisi parmi le titane, le zirconium et le hafnium,
A représente un anion contenant au moins un noyau η⁵-cyclopentadiènyle lié par coordination au métal M,
chacun des groupes R' représente indépendamment un groupe substituant choisi parmi l'atome d'hydrogène, les atomes d'halogène, les groupes alkyle en C₁ à C₈, les groupes alkylsilyle en C₃ à C₁₂, les groupes cycloalkyle en C₅ à C₈, les groupes aryle en C₆ à C₁₀, les groupes alcoxy en C₁ à C₈, les groupes carboxyliques en C₁ à C₈, les groupes dialkylamino en C₂ à C₁₀ et les groupes alkylsilylamino en C₄ à C₂₀,
R" représente un groupe substituant de même nature que les groupes R' précédents, choisi indépendamment d'eux, ou un second anion contenant un noyau η⁵-cyclopentadiènyle lié par coordination au métal M,
R"' représente un groupe divalent ayant 1 à 10 atomes de carbone, contenant éventuellement un ou plusieurs hétéroatomes choisis de préférence parmi les atomes d'oxygène, d'azote, de phosphore et de silicium, qui forme un pont entre A et R" auxquels il est lié par des liaisons covalentes,
n désigne un nombre entier, égal à la valence de M diminuée de 2,
x peut être égal à 0 ou 1,
et
(C) un dérivé organique oxygéné de l'aluminium, du gallium ou de l'étain.

2. Catalyseur selon la revendication 1, pour lequel, dans ladite alpha-oléfine de formule (II), R⁴ représente un groupe méthyle ou éthyle et R⁵ représente un groupe méthyle, éthyle, n-propyle, n-butyle, cyclopentyle ou phényle.

3. Catalyseur selon la revendication 1, dans lequel ladite alpha-oléfine de formule (II) est l'isobutène, le méthyl-2 pentène-1, l'éthyl-2 butène-1, le diméthyl-2,4 pentène-1, l'alpha-méthylstyrène, le méthylidènecyclopentane, le méthylidènecyclohexane, l'éthyl-2 octène-1, ou le méthylidène-4 norbornène-1.

4. Catalyseur selon l'une quelconque des revendications précédentes, dans lequel le rapport des moles de ladite alpha-oléfine de formule (II) aux atomes-grammes dudit métal M est égal ou supérieur à 2 et est compris de préférence dans l'intervalle allant de 50 à 500.

5. Catalyseur selon la revendication 1, pour lequel, dans la formule (III), x est égal à 1, R"' représente un groupe alkylène, dialkylsilylène, diarylsilylène ou arylène, et R" représente un second anion contenant un noyau η⁵-cyclopentadiènyle lié par coordination au métal M.

6. Catalyseur selon la revendication 1, pour lequel, dans la formule (III), x est égal à 0 et R" représente un second anion contenant un noyau η⁵-cyclopentadiènyle lié par coordination au métal M.

7. Catalyseur selon l'une quelconque des revendications 1 à 6, dans lequel ledit dérivé organique oxygéné est un méthylaluminoxane oligomère ou polymère, contenant 4 à 70 motifs.

8. Catalyseur selon l'une quelconque des revendications 1 à 7, dans lequel le rapport atomique du métal du dérivé organique oxygéné (C) au métal M du constituant (B) est compris dans l'intervalle allant de 10 à 10.000, de préférence dans l'intervalle allant de 100 à 5.000.

9. Procédé pour améliorer l'activité d'un catalyseur destiné à la polymérisation ou à la copolymérisation de l'éthylène, constitué ou issu d'un composé organométallique du type métallocène, répondant à la formule générale (III) suivante : 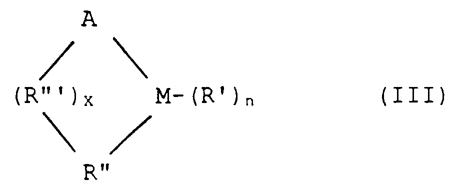 dans laquelle
M représente un métal choisi parmi le titane, le zirconium et le hafnium,
A représente un anion contenant au moins un noyau η⁵-cyclopentadiènyle lié par coordination au métal M,
chacun des groupes R' représente indépendamment un groupe substituant choisi parmi l'atome d'hydrogène, les atomes d'halogène, les groupes alkyle en C₁ à C₈, les groupes alkylsilyle en C₃ à C₁₂, les groupes cycloalkyle en C₅ à C₈, les groupes aryle en C₆ à C₁₀, les groupes alcoxy en C₁ à C₈, les groupes carboxyliques en C₁ à C₈, les groupes dialkylamino en C₂ à C₁₀ et les groupes alkylsilylamino en C₄ à C₂₀,
R" représente un groupe substituant de même nature que les groupes R' précédents, choisi indépendamment d'eux, ou bien un second anion contenant un noyau η⁵-cyclopentadiènyle lié par coordination au métal M,
R"' représente un groupe divalent ayant 1 à 10 atomes de carbone, contenant éventuellement un ou plusieurs hétéroatomes choisis de préférence parmi les atomes d'oxygène, d'azote, de phosphore et de silicium, qui forme un pont entre A et R" auxquels il est lié par des liaisons covalentes,
n désigne un nombre entier, égal à la valence de M diminuée de 2,
x peut être égal à 0 ou 1,
et d'un dérivé organique oxygéné de l'aluminium, du gallium ou de l'étain, en contact l'un avec l'autre,
caractérisé en ce que ledit catalyseur est mis en contact avec une alpha-oléfine répondant à la formule (II) précédente de la revendication 1, les quantités mises en contact étant telles que le rapport des moles de l'alpha-oléfine aux atomes-grammes du métal M n'est pas inférieur à 2 et est compris de préférence dans l'intervalle allant de 50 à 500, étant entendu que ladite alpha-oléfine n'est pas l'isoprène.

10. Procédé de polymérisation ou de copolymérisation de l'éthylène, qui comprend l'introduction de l'éthylène et sa polymérisation ou copolymérisation en suspension, en solution ou en phase gazeuse, dans un réacteur opérant en continu ou de manière discontinue, en présence d'un catalyseur approprié, **caractérisé** en ce que ledit catalyseur est un catalyseur selon l'une quelconque des revendications 1 à 8.

11. Procédé selon la revendication 10, qui est destiné à l'homopolymérisation de l'éthylène.

12. Procédé selon la revendication 10 ou 11, dans lequel ledit catalyseur est formé in situ dans ledit réacteur de polymérisation.

13. Procédé selon la revendication 12, dans lequel l'éthylène est introduit dans le réacteur, en mélange avec une alpha-oléfine répondant à la formule (II) précédente de la revendication 1.
